# EUROPEAN PATENT APPLICATION

(11) **EP 3 450 112 A1**
(43) Date of publication of application: **06.03.2019**
(21) Application number: 18190808.8
(22) Date of filing: 24.08.2018
(51) Int. Cl.: B25F 5/00

(54) **ELECTRIC TOOL SYSTEM AND METHOD OF OPERATING THE SAME**

(30) Priority: 28.08.2017 CN 201710749155
(71) Applicant: TTI (Macao Commercial Offshore) Limited, Macao (MO)
(72) Inventor: Lee, Hei Man Raymond, Kwai Chung (HK); Li, Yong Min, Dongguan City (CN); Lian, Hai, Dongguan City (CN); Xu, Dian Wu, Dongguan City (CN)
(74) Representative: Stevenson-Hill, Jack Patrick

(57) **Abstract**

A method of operating electric tool system (20), the electric tool system comprising a first electric tool (200) and a second electric tool (250), wherein the method includes: providing a first battery (100) for the first electric tool and a second battery (110) for the second electric tool; designating the first battery as a master, and designating the second battery as a slave; configuring the first electric tool to a first operating mode; detecting a first operating parameter by the master; transmitting a first signal (25) from the master to the slave based on the first operating parameter detected by the master; the slave receiving the first signal from the master and enabling operation of the second electric tool. Each of the first and the second batteries is provided with a control module which can establish a communication link therebetween. A wireless module adapter installed in an electric tool and adapted to control operation of the electric tool, the adapter comprises a wireless communication transceiver operable to communicate with another wireless module adapter installed in another electric tool; the wireless module adapter is configurable between master mode in which the transceiver configured to transmit a first signal to control the another electric tool, and slave mode in which the transceiver configured to receive a second signal to allow the electric tool to be manipulated by the another electric tool configured in master mode.

## Description

### TECHNICAL FIELD

The present invention relates to an electric tool system having electric DC tools. More specifically, the present invention relates to automatic control of the operation of one tool depending on the operation of another tool.

### BACKGROUND OF THE INVENTION

It is well-known to use two different electric tools in the same working environment to facilitate cooperation between various power tools. For example, various types of dust collection devices are used in conjunction with fixed or portable power tools such as woodworking machines, sanders, cleaners/washers and the like.

In the existing technology, when using more than two electric tools, the user usually needs to control the electric tools one at a time when using this kind of power tool/vacuum combination. There are many situations where the tool is used intermittently throughout the working process. It is, however, inconvenient to switch the vacuum on and off manually.

In these situations it is desirable to turn off the vacuum when the tool is not in use so as to conserve energy and reduce the noise level. Communicative control over the electric tools within those combinations of electric tools or electric tool systems becomes a strong need. Also, integration of such communicative control within the electric tools system without significantly alternating the original design of the system would be desired when it comes to cost effectiveness at product development and manufacturing stage.

In the above account, it is an object of the at least one embodiment of the present invention to provide a method of operating an electric tool system having combination of electric tools conveniently controlled by the user and an electric tool system equipped with control allowing one of the electric tools within the system start and stop working automatically responding to the start and stop of another electric tool within the system.

Accordingly, the present invention in one aspect, is a method of operating electric tool system comprising a first electric tool and a second electric tool. The method includes the steps of providing a first battery for the first electric tool and a second battery for the second electric tool; designating the first battery as a master, and designating the second battery as a slave; configuring the first electric tool to a first operating mode; detecting a first operating parameter by the master; transmitting a first signal from the master to the slave based on the first operating parameter detected by the master; the slave receiving the first signal from the master and enabling operation of the second electric tool.

In an exemplary embodiment of the present invention, the method further comprises configuring the first electric tool to a second operating mode; detecting a second operating parameter by the master; transmitting a second signal from the master to the slave based on the second operating parameter detected by the master; the slave receiving the second signal from the master and disabling operation of the second electric tool.

In another exemplary embodiment of the present invention, in the detecting step the first and second operating parameters are current being drawn from the first battery.

In yet another exemplary embodiment of the present invention, the second electric tool is configurable between a first mode in which the second electric tool enables the first signal from the master controlling operation of the second electric tool and a second mode in which the second electric tool disables the first signal from the master controlling operation of the second electric tool.

Preferably, the second electric tool is configurable between a first mode in which the second electric tool enables the first or second signal from the master controlling operation of the second electric tool and a second mode in which the second electric tool disables the first or second signal from the master controlling operation of the second electric tool.

In another implementation, the first and second batteries are rechargeable batteries.

In yet another implementation, in the transmitting step the master uses peer-to-peer wireless communication link to send the first or the second signal to the slave, and preferably, the communication link is Bluetooth.

In another implementation the first and second operating parameter detected by the master are defined by serial bus communication protocol selected from the group consisting of SPI, UART, I²C, CAN, USB, IEEE1394 or the like.

In accordance with another aspect of the invention, there is provided an electric tool system comprising a first electric tool and a second electric tool, the first electric tool comprising a first battery pack for providing power to the first electric tool and the second electric tool comprising a second battery pack for providing power to the second electric tool; the first battery pack provided with a first control module having a first processor, a first wireless communication transceiver and a sensing device coupled thereto, and the second battery pack provided with a second control module having a second processor and a second wireless communication transceiver coupled thereto; the first processor is operable to wirelessly communicate with the second processor by establishing a peer-to-peer communication link between the first and second battery packs; the first battery pack designated as a master and the second battery pack designated as a slave; wherein the first transceiver adapted to transmit a signal to the second transceiver to control operation of the second electric tool. The second electric tool starts and stops operating automatically responding to the start and stop of the first electric tool.

Preferably, the second electric tool is configurable to switch between a first mode in which the second electric tool is configured to enable the signal from the master controlling operation of the second electric tool, and second mode in which the second electric tool is configured to disable the signal from the master controlling operation of the second electric tool.

More preferably, when the first battery pack supplies power to the first electric tool, the first processor detects a first operating parameter from the master via the sensing device and is further operable to configure the first transceiver to transmit a first signal to the second transceiver when the first operating parameter is detected. When the first battery pack does not supply power to the first electric tool, the first processor detects a second operating parameter from the master via the sensing device and is further operable to configure the first transceiver to transmit a second signal to the second transceiver when the second operating parameter is detected.

Preferably, the first and second operating parameters are current being drawn from the first battery pack to the first electric tool.

According to another implementation, when the second transceiver receives the first signal, the second processor enables the operation of the second electric tool. And preferably, when the second transceiver receives the second signal, the second processor disables the operation of the second electric tool.

According to yet another implementation, the peer-to-peer communication link is defined by Bluetooth protocol.

Preferably the first and second operating parameters are defined by serial bus communication protocol selected from the group consisting of SPI, UART, I²C, CAN, USB, IEEE1394 or the like.

In a further aspect of the present invention, it provides an electric tool comprises a battery pack for providing power to the electric tool, the battery pack provided with a control module comprising a processor and a wireless communication transceiver coupled thereto, wherein the processor of the electric tool is operable to wirelessly communicate with an external device by establishing a peer-to-peer communication link between the processor and the external device, and wherein the transceiver is adapted to transmit signal to the external device.

In yet another aspect of the present invention, it provides an electric tool comprising a battery pack for providing power to the electric tool, the battery pack provided with a control module comprising a processor and a wireless communication transceiver coupled thereto, wherein the processor of the electric tool is operable to wirelessly communicate with an external device by establishing a peer-to-peer communication link between the processor and the external device, and wherein the transceiver is adapted to receive signal from the external device.

In yet further aspect of the present invention, it provides a wireless module adapter installed in an electric tool and adapted to control operation of the electric tool, the adapter comprises a wireless communication transceiver operable to communicate with another wireless module adapter installed in another electric too. The wireless module adapter is configurable between master mode in which the transceiver configured to transmit a first signal to control the another electric tool, and slave mode in which the transceiver configured to receive a second signal to allow the electric tool to be manipulated by the another electric tool configured in master mode.

Preferably, the wireless module adapter further comprises a processor and a mode switch coupled thereto, the mode switch is switchable between a first position and a second position.

More preferably, the processor further coupled to the wireless communication transceiver, wherein the processor is operable to configure the adapter to the master mode and thereby configure the transmitter to transmit the first signal if the mode switch switched to the first position, and to configure the adapter to the slave mode and thereby configure the transmitter to receive the second signal if the mode switch switched to the second position.

Preferably, the process is further coupled to a detecting unit operable to determine operating status of the electric tool.

In another exemplary embodiment of the present invention, the wireless module adapter of comprises a power control unit coupled to the processor, wherein the power control unit is operable to allow the wireless module adapter to receive power from the electric tool to which the wireless module adapter adapted.

In yet another exemplary embodiment of the present invention, the wireless communication transceiver is operable on a peer-to-peer wireless communication network having a plurality of wireless module adapters adapted to a plurality of electric tools.

Preferably, the wireless module adapter communicates with other wireless module adapters of the plurality of wireless modules adapters adapted to the plurality of the electric tools in the network to discover the slaves when the wireless module adapter is configured as the master, or discover the master when the wireless module adapter is configured as the slave.

More preferably, the peer-to-peer communication link is defined by wireless network protocol selected from the group consisting of Bluetooth, Wi-Fi, Zigbee, infrared or the like.

In yet another aspect of the present invention, a kit comprises a plurality of wireless module adapters and each of the plurality of the wireless module adapters shares the same communication parameter.

Any feature of any embodiment or aspect described herein may be applied to and/or incorporated into any other embodiment or aspect described herein as appropriate and applicable.

Compared with the prior art it is therefore an objective of the present invention to provide synchronized control over the electric tools within an electric tool system such that the user can control or operate the tools conveniently, and to conserve energy and reduce noise level when the tool is not in use. It is another objective of the present invention to establish a wireless communication link between electric tools via a wireless communication module to be installed to each of the electric tools and to provide the electric tool an Internet-of-things (IoT) capability by synchronized control over the electric tools within the communication link so as to control operating the tools.

Also, the present invention provides an integration of such synchronized communicative control within the electric tools system without significantly alternating the original design of the system, in other words the present invention provide a cost effective way to integrate the communicative control within the tool system.

Those skilled in the art will appreciate that the invention described herein is susceptible to variations and modifications other than those specifically described. The invention includes all such variations and modifications. The invention also includes all steps and features referred to or indicated in the specification, individually or collectively, and any and all combinations of the steps or features.

Other features and aspects of the invention will become apparent by consideration of the following detailed description and accompanying drawings.

### BRIEF DESCRIPTION OF THE DRAWINGS

Fig. 1 shows the communication link established between the battery packs according to the present invention.
Fig. 2 illustrates the wireless communication within electric tool system, in accordance with the present invention.
Fig. 3 illustrates a simplified block diagram of a peer-to-peer communication link for the battery packs being used on the tools in the electric tool system, in accordance with some embodiments of the present invention.
Fig. 4 illustrates a simplified block diagram of an electric tool adapted with transmitting feature according to another aspect of the present invention.
Fig. 5 illustrates a simplified block diagram of an electric tool adapted with receiving feature according to yet another aspect of the present invention.
Fig. 6 shows a flow chart of a method of operating electric tool system, in accordance with the present invention.
Fig. 7 shows a flow chart of a method of operating electric tool system as shown in

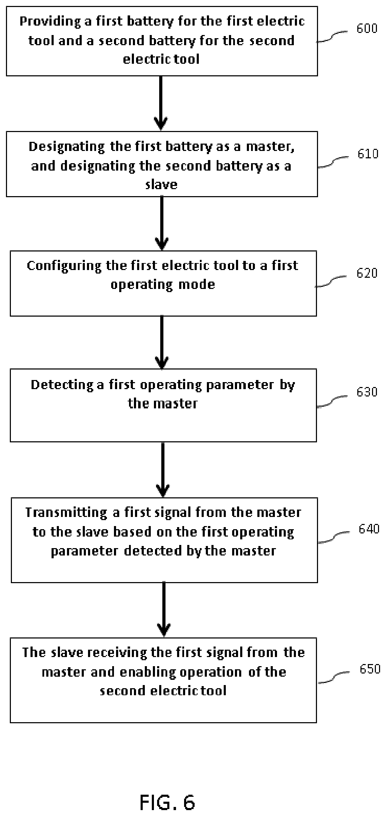

Fig. 6 having further steps, in accordance with the present invention.

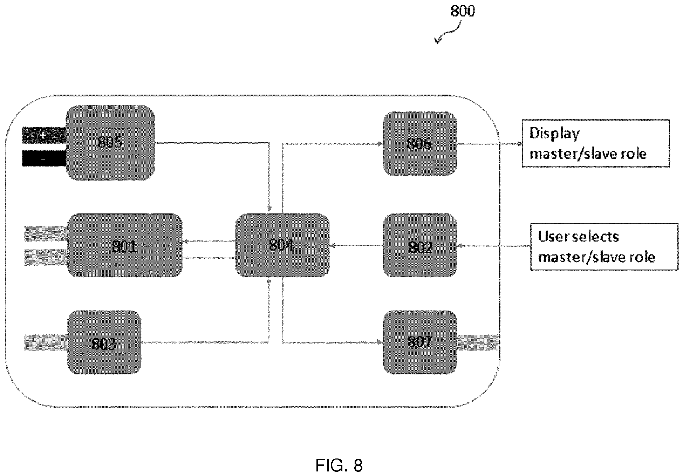

Fig. 8 illustrates a simplified block diagram of a wireless module adapter to be installed in electric tool in accordance with another aspect of the present invention.

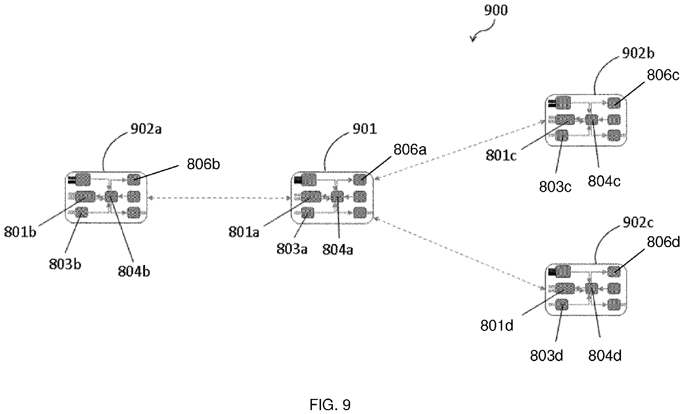

Fig. 9 shows a simplified block diagram of a wireless communication network established by a plurality of wireless module adapter as shown in Fig. 8, in accordance with the present invention.

### DETAILED DESCRIPTION OF THE INVENTION

Unless otherwise defined, all technical terms used herein have the same meaning as commonly understood by one skilled in the art to which the invention belongs.

As used herein, "comprising" means including the following elements but not excluding others. "Essentially consisting of" means that the material consists of the respective element along with usually and unavoidable impurities such as side products and components usually resulting from the respective preparation or method for obtaining the material such as traces of further components or solvents. "Consisting of" means that the material solely consists of, i.e. is formed by the respective element. As used herein, the forms "a," "an," and "the," are intended to include the singular and plural forms unless the context clearly indicates otherwise.

### Apparatus System

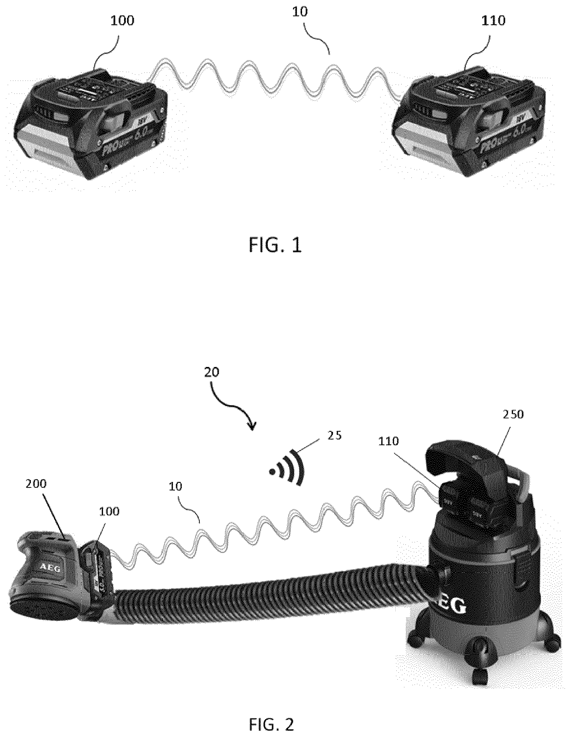

As illustrated in FIG. 1, the present invention incorporates a wireless communication protocol within each of the battery packs to be used with electric tools within an electric tool system. The wireless communication protocol can be anything ranging from RF, Bluetooth™, Wi-Fi™, etc. An internal processor (not shown in FIG. 1) is included in each battery pack having a wireless communication transceiver coupled thereto. A wireless peer-to-peer communication link can be established between the battery packs without requiring a centralized controller or server. Using the peer-to-peer communication protocol, one of the battery packs can be designated as a master and another battery pack can be designated as a slave. The master and slave can be paired up automatically or manually by pressing button, at consumer-end before first use. In another embodiment pairing up master and slave can be carried out via firmware such computing device to select master and slave status for both batteries.

In yet another embodiment the designation of master and slave can be carried out and pre-configured at manufacturing stage such that no extra pairing is needed before first use.

As shown in FIG. 2, the first embodiment of the present invention provides an electric system 20, which includes a first electric tool 200 and a second electric tool 250. The second electric tool 250 can start up automatically respond to the startup of the first electric tool 200. The first electric tool 200 may be a sander, table saw, miter saw, jig saw, angle grinder, electric router, electric hammer, drill, etc. Of course other electric tools can also be used, but are not described in detail due to limit of the text. The second electric tool 250 is selected from among a vacuum cleaner, water gun, blower, or portable working lamp. In this embodiment, only the case where the first electric tool 200 is a DC tool, and the second electric tool 250 is a DC wet/dry vacuum is described due to the limit of the text.

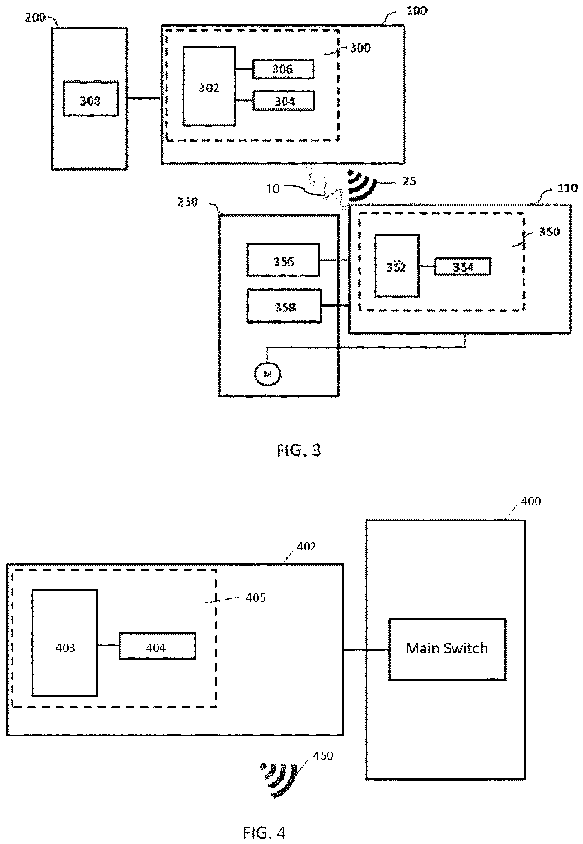

Refer to FIG. 2 and FIG. 3, the DC tool 200 includes a battery pack 100 housed with a control module 300. The battery pack 100 provides power to the DC tool 200. The DC wet/dry vacuum 250 includes, a battery pack 110, and a control module 350 disposed within the battery pack 110. The battery pack 110 provides power to the DC wet/dry vacuum 250. Both battery packs 100, 110 are DC rechargeable battery. Each of the control modules 300, 350 contains a processor 302, 352 and a transceiver 304, 354 coupled thereto. The control module 300 of the DC tool battery pack 100 further contains a sensing device 306 coupled to the processor 302. The processor 302 within the control module 300 disposed in DC tool battery pack 100 establishes a wireless peer-to-peer communication link 10 with the processor 352 within the control module 350 in the DC wet/dry vacuum battery pack 110, such that the control module 300 of DC tool battery pack 100 is operable to wireless communicate with the control module 350 of DC wet/dry vacuum battery pack 110 without requiring a centralized controller or server. Also as illustrated in FIG. 1 such communication link 10 is unidirectional using peer-to-peer protocol and in particular in the embodiment such link is Bluetooth™. Using the peer-to-peer protocol the DC tool battery pack 100 is designated as a master or group owner in the communication link 10, and the DC wet/dry vacuum battery pack 110 is designated as a slave or client. Alternatively, a battery pack can be initiated as a master and another battery pack can be initiated as a slave by a gesture or user interrupt using buttons. Indicators such as LED can be used to indicate a successful/failed pairing.

With the above communication link 10 having been established, the DC wet/dry vacuum 250 conducts the function of automatic vacuuming, and automatically starts or stops operating by receiving a power on/power off signal 25 transmitted from the master battery on the DC tool 200.

When the DC wet/dry vacuum 250 is configured to AUTO mode, the user is only required to operate the DC tool 200 to process a workpiece, and is not required to additionally operating the DC wet/dry vacuum 250, so convenience is brought to the user; the vacuum 250 senses the signal 25 from the master battery 100 after the startup of the DC tool 200, so the work of DC tool 200 and vacuum 250 is synchronized and highly consistent, which means that after the DC tool 200 is turned on, the DC wet/dry vacuum 250 will immediately start to operate.

When the DC wet/dry vacuum 250 is configured to MANUAL mode, the user is required to manually turn on the DC tool 200 and the DC wet/dry vacuum 250 independently by their corresponding main switch 308, 358 in a conventional manner, overriding the AUTO start/stop features. During manual operation mode, in one embodiment, the transceiver 304 of the master 100 may still transmit a power on/power off signal 25; however the transceiver 354 of the slave 110 is disabled to receive such signal 25.

It shall be appreciated that the automatic operation as described above can be carried out by pre-configuring the system as AUTO mode at manufacturing. Yet in another embodiment, the operation mode can be selected at consumer-end via a switch, and particularly a mode switch 356 disposed on the wet/dry vacuum 250.

In order to transmit a power on/power off signal 25 from the transceiver 304 of the master 100, the sensing device 306 detects when the DC tool 200 is on/off and feedbacks to the processor 302 of the master 100 to send power on/power off signal 25 to the DC wet/dry vacuum battery pack 250 via the transmitter 304 on the control module 300 to control the operation of the DC wet/dry vacuum 250 when the vacuum 250 is configured to AUTO mode. The sensing device 306 could be a current sensor, a voltage sensor, etc. In this embodiment, only the case where the sensing device 306 is current sensor is described. The power on and power off parameters are defined by the current being drawn from the DC tool battery pack 100 to the load (i.e. DC tool 200) when the tool 200 is turned on and off. Such parameters are defined by serial bus communication protocol such as SPI, UART, I²C, CAN, USB, IEEE1394 or the like.

More specifically, when the transceiver 354 of the slave control module 350 receives a power on signal 25 from the transceiver 304 of the master control module 300, the processor 352 of the slave control module 350 enables the operation of the DC wet/dry vacuum 250 by allowing the DC wet/dry vacuum battery pack 110 to supply power to the DC wet/dry vacuum 250. When the transceiver 354 of the slave control module 350 receives a power off signal 25 from the transceiver 304 of the master control module 300, the processor 352 of the of the slave control module 350 disables the operation of the DC wet/dry vacuum 250 by not allowing the DC wet/dry vacuum battery pack 110 to supply power to the DC wet/dry vacuum 250.

As illustrated in FIG. 4 the second embodiment of the present invention provides an electric tool 400 consisting of a battery pack 402 which supplies power to the electric tool 400. The battery pack 402 is provided with a control module 405 having a processor 403 and a wireless communication transceiver 404 coupled thereto. The processor 403 of the control module 405 within the electric tool battery pack 402 is operable to wirelessly communicate with an external device (not shown) by establishing a peer-to-peer communication link with external device.

With the communication link having been established, the transceiver 404 is able to transmit a signal 450 to an external device (not shown) to control the external device, e.g. enable and/or disable operating of the external device, as long as the control module 405 of the electric tool 400 shares the same wireless communication protocol which is compatible with the external device.

The wireless communication link between the electric tool 400 and the external device can be paired link or peer network. The transceiver 404 can be configured to transmit communication signal 450 to the external device.

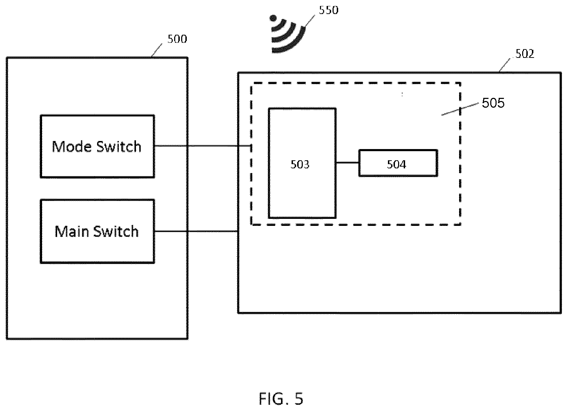

Turning to FIG. 5, the third embodiment of the present invention provides an electric tool 500 consisting of a battery pack 502 which supplies power to the electric tool 500. The battery pack 502 is provided with a control module 505 having a processor 503 and a wireless communication transceiver 504 coupled thereto. The processor 503 of the control module 505 within the electric tool battery pack 502 is operable to wirelessly communicate with an external device (not shown) by establishing a peer-to-peer communication link with the external device.

With the communication link having been established, the transceiver 504 is able to receive a signal 550 from an external device (not shown) to control the electric tool 500, e.g. enable and/or disable operating of the electric tool 500, as long as the control module 505 of the electric tool 500 shares the same wireless communication protocol compatible with the external device.

The wireless communication link between the electric tool 500 and the external device can be paired link or peer network. In this particular embodiment the transceiver 504 can be configured to receive communication signal 550 from the external device.

The external devices as described in the second and third embodiments can be a choice of electric tool encompassing an exhaustive list of tools driven by electric power as described in the above context, and be used in combination with the electric tool 400, 500 which requires communication therebetween to facilitate efficient overall process. Alternatively, the external devices can be handheld device or computing device which can perform full/part computing function. Specifically this handheld device or computing device covers a wide range of devices embedded with different protocols.

It is envisioned that the communication link or network could operate under any IEEE 802.11 communication protocol known in the art. However, it should be recognized that the present invention could operate under many different communication system, including trunked, WLAN, Wireless Wide Area Network, Bluetooth™, Wi-Fi™, Radio Frequency Identification, and the like. In particular, only the case where the communication protocol is Bluetooth™ is described.

As illustrated in the flowchart of FIG. 6, the fourth aspect of the present invention provides a method of operating electric tool system comprising a first electric tool and a second electric tool.

### Auto power up mode

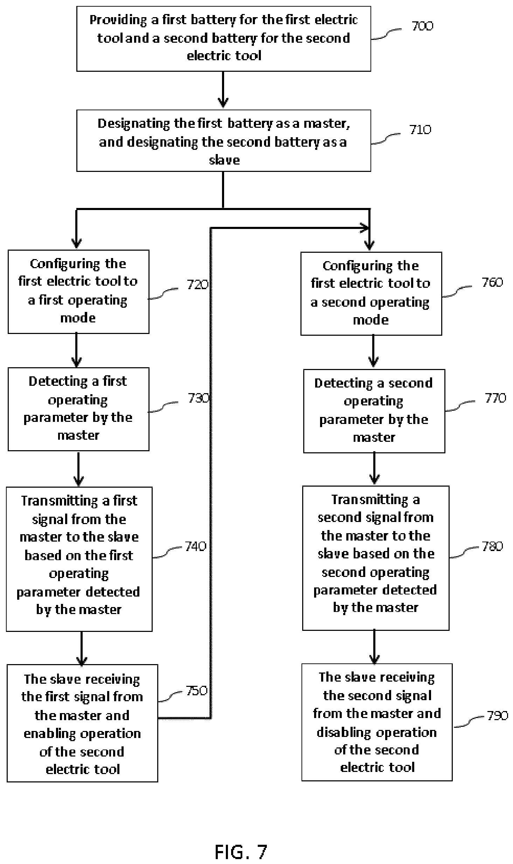

Refer to both FIG. 6 and FIG. 7, the method includes providing a battery for the DC tool and another battery for the DC wet/dry vacuum 600, 700. Each of these batteries is provided with a processor and a wireless communication transceiver coupled thereto. Preferably, each battery is provided with a user interface (e.g. light indicator) coupled to the battery processor.

The method includes designating the DC tool battery as a master, and designating the DC wet/dry vacuum battery as a slave 610, 710.

In this embodiment, and as illustrated in FIG.1, master and slave can be paired up automatically or manually by pressing button, at consumer-end before first use. In another embodiment pairing up master and slave can be carried out via firmware such computing device to select master and slave status for both batteries.

In yet another embodiment the designation of master and slave can be carried out and pre-configured at manufacturing stage such that no extra pairing is needed before first use.

The method further includes configuring the DC tool to a power-up mode in which the DC tool is powered up by the DC tool battery 620, 720.

The method also includes detecting an operating parameter (power-up operating parameter) for the master battery by its associated processor when the DC tool is powered up 630, 730. The battery operating parameter can include a current drawn from the master battery to the DC tool. Operating parameter can also be open circuit voltage, etc. in another embodiment. Such parameter detected by a sensing means coupled to the processor in the master battery is defined by serial bus communication protocol such as SPI, UART, I²C, CAN, USB, IEEE1394 or the like.

The method further includes transmitting a power-up signal from the master battery to the slave battery based on the power-up operating parameter detected by the master 640, 740 upon powering up DC tool. The method still further includes the slave battery receiving the power-up signal from the master battery and enabling the slave battery to supply power to the DC wet/dry vacuum 650, 750.

### Auto power down mode

Refer to FIG. 7 in particular, the method still further includes configuring the DC tool to a power-down mode, simply turning off the DC tool 760; detecting an operating parameter (power-down operating parameter) for the master battery by its associated processor when the DC tool is powered down 770; transmitting a power-down signal from the master to the slave based on the power-down operating parameter detected by the master 780; the slave receiving the power-down signal from the master and disabling the slave battery to supply power to the DC wet/dry vacuum 790.

In transmitting power-up and power-down signals from the master to the slave the master uses peer-to-peer wireless communication link to send the signals. Such communication link is defined by wireless communication protocol can be anything ranging from Radio Frequency Identification, Bluetooth™, Wi-Fi™, etc. Preferably, the communication link is unidirectional and in particular in the embodiment such link is Bluetooth™.

By this method, the user is only required to operate the DC electric tool 200 and not required to operate the DC wet/dry vacuum 250 to realize the situation that when the DC tool 200 is started, the DC wet/dry vacuum can also be automatically started thus bringing great convenience to the user.

### Manual mode

The method may also include configuring the DC wet/dry vacuum 250 to manual mode. In this mode, the DC wet/dry vacuum 250 disables the power-up or power-down signal from the master controlling operation of the DC wet/dry vacuum 250. In other words, the start/stop operation of the DC tool 200 and the DC wet/dry vacuum 250 will be independent with each other.

It shall be appreciated that the automatic operation as described above can be carried out by pre-configuring the system as AUTO mode at manufacturing. Yet in another embodiment, the operation mode can be selected at consumer-end via a switch, and particularly a mode switch disposed on the wet/dry vacuum 250. During automatic operation mode, the vacuum starts or stops automatically responding to the start or stop of the DC tool 200 when the mode switch is switched to auto, bypassing the manual start/stop features on the DC wet/dry vacuum 250. In an embodiment the manual start/stop features are given by main switches on the DC tool 200 and the DC wet/dry vacuum 250 allowing the tool and the vacuum to be switched on and off in a conventional manner, overriding the AUTO start/stop features when the DC wet/dry vacuum is configured to MANUAL mode. During manual operation mode, in one embodiment, the transceiver of the master may still transmit a power-up/power-down signal; however the transceiver of the slave is disabled to receive such signal.

As shown in FIG. 8, a fifth embodiment of the present invention provides a wireless module adapter 800 to be installed in an electric tool (not shown) and adapted to control operation of the electric tool. The adapter 800 comprises a wireless communication transceiver 801 operable to communicate with another wireless module adapter installed in another electric tool. The wireless module adapter 800 is configurable between master mode in which the transceiver 801 configured to transmit a first signal to control the another electric tool, and slave mode in which the transceiver 801 configured to receive a second signal to allow the electric tool to be manipulated by the another electric tool configured in master mode.

Specifically, the wireless module adapter 800 further comprises a processor 804 and a mode switch 802 coupled thereto, the mode switch is switchable between a first position and a second position for configuring the adapter 800 as master or slave.

The processor 804 coupled to the wireless communication transceiver 801 is operable to configure the adapter 800 to the master mode and thereby configure the transmitter 801 to transmit a first signal if the mode switch 802 switched to the first position, and to configure the adapter 800 to the slave mode and thereby configure the transmitter 801 to receive a second signal if the mode switch 802 switched to the second position. It should be appreciated that the mode switch 802 can be any switching means characterized with dual-mode selecting capability.

More specifically, the wireless module adapter 800 further comprises a detecting unit 803 for determining the operating status (i.e. on/off) of the electric tool adapted with the module adapter 800. The detecting unit 803 can be a current sensor, a voltage sensor, etc. In this embodiment, only the case where the detecting unit 803 is current sensor is described. The power on and power off parameters are defined by the current being drawn from the power source (DC battery pack/AC mains) of the electric tool to the electric tool when the electric tool is turned on and off. Such parameters are defined by serial bus communication protocol such as SPI, UART, I²C, CAN, USB, IEEE1394 or the like.

Preferably, the wireless module adapter 800 further includes a display 806 indicating the role (master/slave) of the adapter 800.

The electric tool can be powered by DC via battery or by AC via mains. The wireless module adapter 800 comprises a power control unit 805 coupled to the processor 804 that conditions the power of the electric tool to which the wireless module adapter 800 adapted and thereby to energize the wireless module adapter 800. In other words, the adapter is preferably designed in such a way that as soon as the adapter is installed/adapted to the electric tool, an electric tool power source-electric tool-wireless module adapter electrical communication path is established to facilitate supplying power from the electric tool power source to the wireless module adapter. Alternatively, the adapter 800 may also have its own on-board power source.

Fig. 9 illustrates a wireless communication network 900 formed by a plurality of wireless modules adapters 800 to be installed in a plurality of the electric tools (not shown). Each of the wireless communication transceivers 801a-d is operable on the wireless communication network 900 while they are within a communication range of each other and may communicate the electric tool operating status data, in order to identify the designations of the master 901 and the slaves 902a-c in the network. The wireless communication link 900 can be established between the wireless module adapters 800 without requiring a centralized controller or server. Using the peer-to-peer communication protocol, with the mode selection by the user, one of the wireless module adapters can be designated as a master and all other wireless module adapters can be designated as slaves. The master and slaves can be paired up automatically as set out below.

The design of present invention is characterized with following functions:
(i) detect the operating mode (master/slave) of the wireless module adapters adapted to the electric tools;
(ii) control the peripheral driving signal; and
(iii) intercommunicate between the smart electric tools adapted with the wireless module adapters.

Particularly, the wireless communication link 900 is defined by wireless network protocol such as RF, Bluetooth™, Wi-Fi™, Zigbee, infrared or the like.

In establishing a communication link 900 between the master and slaves, when the slave wireless module adapters 902a-c are initialized, the slave wireless module adapters 902a-c are set to request scan mode. The master wireless module adapter 901 makes a request to invite peripheral slave wireless module adapters 902a-c sharing the same communication range to link up. That is, when the peripheral slave wireless module adapters 902a-c receive the request from the master wireless module adapter 901 having the same communication range, the peripheral slave wireless module adapters 902a-c will automatically and instantly accept the request and thereby the communication link 900 is formed.

In order to transmit a power on/power off signal from the wireless communication transceiver 801a of the master wireless module adapter 901, the sensing device 803a detects when the electric tool adapted with the master wireless module adapter 901 (referred as "master electric tool" hereinafter) is on/off and feedbacks to the processor 804a of the master wireless module adapter 901 to send power on/power off signal to the electric tools adapted with the slave wireless module adapters 902a-c (referred as "slave electric tools" hereinafter) via the transmitter 801a on the master wireless module adapter 901 to control the operation of the slave electric tools. The sensing device 803a-d could be a current sensor, a voltage sensor, etc. In this embodiment, only the case where the sensing device 803a-d is current sensor is described. The power on and power off parameters are defined by the current being drawn from the power supply of the master electric tool to the load (i.e. master electric tool per se) when the master electric tool is turned on and off. Such parameters are defined by serial bus communication protocol such as SPI, UART, I²C, CAN, USB, IEEE1394 or the like.

More specifically, when the wireless communication transceiver 801b-d of the slave wireless module adapters 902a-c receives a power on signal from the wireless communication transceiver 801a of the master wireless module adapter 901, the processor 804b-d of the slave wireless module adapters 902a-c enable the operation of the slave electric tools by allowing DC battery pack (not shown) or AC mains (not shown) to supply power to the slave electric tools. When the wireless communication transceiver 801b-d of the slave wireless module adapters 902a-c receives a power off signal from the wireless communication transceiver 801a of the master wireless module adapters 901, the processor 804b-d of the slave wireless module adapters 902a-c disable the operation of the slave electric tools by inhibiting DC battery pack (not shown) or AC mains (not shown) to supply power to the slave electric tools.

The electric tool may be a sander, table saw, miter saw, jig saw, angle grinder, electric router, electric hammer, drill, etc. Of course other electric tools can also be used, but are not described in detail due to limit of the text.

In another exemplary embodiment of the present invention, it provides a kit comprising a plurality of wireless module adapters 901, 902a-c to be adapted to a plurality of electric tools and each of the plurality of the wireless module adapters shares the same communication parameter.

In the foregoing specification, specific embodiments have been described. However, one of ordinary skill in the art appreciates that various modifications and changes can be made without departing from the scope of the invention as set forth in the claims below. Accordingly, the specification and figures are to be regarded in an illustrative rather than a restrictive sense, and all such modifications are intended to be included within the scope of present teachings.

## Claims

1. A method of operating electric tool system, the electric tool system comprising a first electric tool and a second electric tool, wherein the method includes:
providing a first battery for the first electric tool and a second battery for the second electric tool;
designating the first battery as a master, and designating the second battery as a slave;
configuring the first electric tool to a first operating mode;
detecting a first operating parameter by the master;
transmitting a first signal from the master to the slave based on the first operating parameter detected by the master;
the slave receiving the first signal from the master and enabling operation of the second electric tool.

2. The method of claim 1, wherein the method further comprising:
configuring the first electric tool to a second operating mode;
detecting a second operating parameter by the master;
transmitting a second signal from the master to the slave based on the second operating parameter detected by the master;
the slave receiving the second signal from the master and disabling operation of the second electric tool.

3. The method of claim 1 or 2, wherein in the detecting step the first and second operating parameters are current being drawn from the first battery.

4. The method of claim 2, wherein the second electric tool is configurable between a first mode in which the second electric tool enables the first or second signal from the master controlling operation of the second electric tool and a second mode in which the second electric tool disables the first or second signal from the master controlling operation of the second electric tool.

5. The method of any of preceding claim, wherein in the transmitting step the master uses peer-to-peer wireless communication link to send the first or the second signal to the slave, and, optionally, wherein the peer-to-peer wireless communication link is Bluetooth.

6. The method of claim 1 or 2, wherein the first and second operating parameter detected by the master are defined by serial bus communication protocol selected from the group consisting of SPI, UART, I²C, CAN, USB, IEEE1394 or the like.

7. An electric tool system comprises a first electric tool and a second electric tool, the first electric tool comprising a first battery pack for providing power to the first electric tool and the second electric tool comprising a second battery pack for providing power to the second electric tool; the first battery pack provided with a first control module having a first processor, a first wireless communication transceiver and a sensing device coupled thereto, and the second battery pack provided with a second control module having a second processor and a second wireless communication transceiver coupled thereto; the first processor is operable to wirelessly communicate with the second processor by establishing a peer-to-peer communication link between the first and second battery packs; the first battery pack designated as a master and the second battery pack designated as a slave; wherein the first transceiver adapted to transmit a signal to the second transceiver to control operation of the second electric tool.

8. The electric tool system of claim 7, wherein the second electric tool is configurable to switch between a first mode in which the second electric tool is configured to enable the signal from the master controlling operation of the second electric tool, and second mode in which the second electric tool is configured to disable the signal from the master controlling operation of the second electric tool.

9. The electric tool system of claim 7 or claim 8, wherein when the first battery pack supplies power to the first electric tool, the first processor detects a first operating parameter from the master via the sensing device and is further operable to configure the first transceiver to transmit a first signal to the second transceiver when the first operating parameter is detected.

10. The electric tool system of claim 7 or claim 8, wherein when the first battery pack does not supply power to the first electric tool, the first processor detects a second operating parameter from the master via the sensing device and is further operable to configure the first transceiver to transmit a second signal to the second transceiver when the second operating parameter is detected.

11. An electric tool comprising a battery pack for providing power to the electric tool, the battery pack provided with a control module comprising a processor and a wireless communication transceiver coupled thereto, wherein the processor of the control module within the battery pack of the electric tool is operable to wirelessly communicate with an external device by establishing a communication link between the processor and the external device, and wherein the transceiver is adapted to transmit signal to the external device.

12. An electric tool comprising a battery pack for providing power to the electric tool, the battery pack provided with a control module comprising a processor and a wireless communication transceiver coupled thereto, wherein the processor of the control module within the battery pack of the electric tool is operable to wirelessly communicate with an external device by establishing a communication link between the processor and the external device, and wherein the transceiver is adapted to receive signal from the external device.

13. A wireless module adapter installed in an electric tool and adapted to control operation of the electric tool, the adapter comprises:
a wireless communication transceiver operable to communicate with another wireless module adapter installed in another electric tool;
wherein the wireless module adapter is configurable between master mode in which the transceiver configured to transmit a first signal to control the another electric tool, and slave mode in which the transceiver configured to receive a second signal to allow the electric tool to be manipulated by the another electric tool configured in master mode.

14. The wireless module adapter of claim 13, wherein the wireless module adapter further comprises a processor and a mode switch coupled thereto; wherein the mode switch switchable between a first position and a second position; and
optionally, the processor coupled to the wireless communication transceiver, wherein the processor is operable to configure the adapter to the master mode and thereby configure the transmitter to transmit the first signal if the mode switch switched to the first position, and to configure the adapter to the slave mode and thereby configure the transmitter to receive the second signal if the mode switch switched to the second position.

15. A kit comprises a plurality of wireless module adapters as claimed in any one of claims 13-14, wherein each of the plurality of the wireless module adapters shares the same communication parameter.
